# FASCICULE DE BREVET EUROPEEN

(11) **EP 3 124 853 B1**
(45) Date de publication et mention de la délivrance du brevet: **16.12.2020**
(21) Numéro de dépôt: 16181147.6
(22) Date de dépôt: 26.07.2016
(51) Int. Cl.: F21S 41/148, F21S 41/33, F21S 41/663

(54) **DISPOSITIF D'ÉCLAIRAGE ET/OU DE SIGNALISATION POUR VÉHICULE**
VORRICHTUNG ZUR BELEUCHTUNG UND/ODER SIGNALISIERUNG FÜR KRAFTFAHRZEUG
LIGHTING AND/OR SIGNALLING DEVICE FOR A VEHICLE

(30) Priorité: 31.07.2015 FR 1557441
(43) Date de publication de la demande: 01.02.2017
(73) Titulaire: VALEO VISION, 93012 Bobigny Cedex (FR)
(72) Inventeur: THABET, Ziyed, PARIS 75015 (FR); DE LAMBERTERIE, Antoine, 75019 PARIS (FR)

(56) Documents cités:
- EP-A1- 2 363 320
- EP-A1- 2 770 249
- EP-A1- 2 799 763
- EP-A1- 2 846 081
- EP-A1- 3 124 856
- EP-A2- 2 431 657
- EP-A2- 2 863 108
- DE-A1-102010 056 312
- DE-A1-102012 101 919
- FR-A1- 2 989 647
- JP-A- 2011 129 283
- US-A1- 2009 251 916

## Description

L'invention concerne un dispositif d'éclairage et/ou de signalisation pour véhicule, comprenant au moins une première source de lumière et au moins une deuxième source de lumière, et au moins un réflecteur de lumière apte à focaliser la lumière émise par ladite au moins une première source et la lumière émise par ladite au moins une deuxième source.

Le document DE102012101919 A1 montre un dispositif d'éclairage comportant un réflecteur associé à deux sources de lumière et permettant d'obtenir deux distributions de lumière différentes. Un dispositif d'éclairage connu par exemple du document DE 10 2010 056 312 permet aussi de générer deux distributions de lumière différentes, à l'aide d'un même réflecteur. Le réflecteur comprend une succession de deux types de facettes réfléchissantes ; le premier type de facettes réfléchit principalement la lumière de la première source de lumière, et réfléchit de façon secondaire la lumière de la deuxième source de lumière ; et le second type de facettes réfléchit principalement la lumière de la deuxième source de lumière, et réfléchit de façon secondaire la lumière de la première source de lumière.

Néanmoins, du fait de l'alternance des deux types de facettes, et de la réflexion par les facettes successives des deux sources de lumière, ce dispositif d'éclairage n'est pas applicable à un feu de route dont l'intensité lumineuse est forte. Par exemple, en France, la réglementation en vigueur impose une intensité lumineuse minimale de 43750 Cd au centre d'une distribution de lumière du feu de route.

Ce dispositif d'éclairage présente également l'inconvénient qu'il n'est pas non plus applicable à deux sources de lumières dont les intensités lumineuses sont très différentes l'une de l'autre, en particulier un feu de route et un feu de circulation diurne.

Par exemple, en France, la réglementation en vigueur impose une intensité lumineuse maximale de 1200 Cd pour le feu de circulation diurne, soit environ trente fois moins que la valeur de l'intensité lumineuse au centre de la distribution lumineuse du feu de route.

Enfin, le dispositif d'éclairage selon l'art antérieur comprend un réflecteur avec une succession de facettes réfléchissantes. Une telle constitution complexifie la mise en œuvre industrielle, notamment la fabrication, de ce réflecteur.

Le but de la présente invention est de remédier à ces inconvénients.

A cet effet, l'invention a pour objet un dispositif d'éclairage et/ou de signalisation pour véhicule selon la revendication 1.

Grâce au dispositif d'éclairage selon l'invention, du fait que la première source de lumière est associée au secteur central, la distribution de lumière générée par la première source de lumière occupe une surface large d'intensité faible, bien adaptée pour constituer un feu de circulation diurne, et, du fait que la deuxième source de lumière est associée à ou aux secteurs(s) périphérique(s), la distribution de lumière générée par la deuxième source de lumière occupe une surface moins large mais d'intensité plus forte, bien adaptée pour constituer un feu de route.

Selon une autre caractéristique de l'invention, le dispositif d'éclairage comprend un seul réflecteur, chaque secteur du réflecteur présentant une forme de bande incurvée de sorte que le réflecteur présente une forme de paraboloïde hyperbolique.

Selon une autre caractéristique de l'invention, le réflecteur comprend au moins deux secteurs périphériques disposés le long de deux bords opposés de la bande formant le secteur central du réflecteur.

Selon une autre caractéristique de l'invention, le secteur central forme une cuvette du réflecteur parabolique.

Selon une autre caractéristique de l'invention, chacune desdites première et deuxième sources est disposée en face de la concavité formée par le secteur central du réflecteur.

Selon une autre caractéristique de l'invention, la première source de lumière est plus proche du réflecteur que la deuxième source de lumière.

Selon l'invention, la première source de lumière est disposée au foyer du secteur central.

Selon l'invention, la deuxième source de lumière est disposée au foyer d'au moins un secteur périphérique, préférentiellement de chaque secteur périphérique.

Selon une autre caractéristique de l'invention, le dispositif d'éclairage comprend un moyen de blocage partiel de la lumière émise par la première source.

Selon une autre caractéristique de l'invention, le cache est agencé pour bloquer la lumière émise par la première source et dirigée vers les secteurs périphériques.

Selon une autre caractéristique de l'invention, le dispositif d'éclairage comprend une carte à circuit imprimé solidaire de la première source de lumière.

Selon une autre caractéristique de l'invention, au moins l'un des secteurs est muni de motifs d'étalement de lumière.

Selon une autre caractéristique de l'invention, le secteur central est d'une largeur sensiblement deux fois plus grande que la largeur d'au moins un secteur périphérique, et avantageusement de chaque secteur périphérique.

L'invention porte également sur un projecteur pour véhicule comprenant au moins un dispositif d'éclairage et/ou de signalisation selon l'une quelconque des caractéristiques énoncées ci-dessus.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'un dispositif d'éclairage selon la présente invention ;
- la figure 2 illustre un détail de la figure 1 ;
- la figure 3 illustre une vue de dessus des sources du dispositif d'éclairage de la figure 1 ;
- la figure 4 illustre une vue en perspective d'une variante du dispositif d'éclairage de la figure 1 ;
- la figure 5 illustre une vue de dessus des sources du dispositif d'éclairage de la figure 4 ; et
- la figure 6 illustre un diagramme de répartition lumineuse d'une première source de lumière du dispositif d'éclairage de la figure 1.

### Dispositif d'éclairage et/ou de signalisation

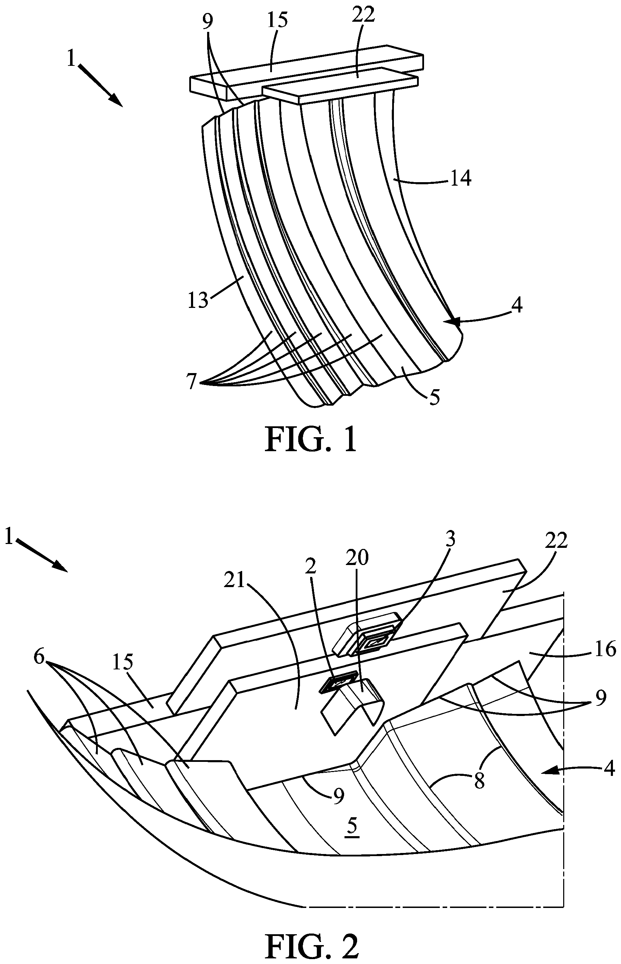

Comme visible aux figures 1 à 5, le dispositif d'éclairage 1 selon la présente invention comprend au moins une première source de lumière 2 et au moins une deuxième source de lumière 3.

Sur les modes de réalisation illustrés, le dispositif d'éclairage 1 comprend deux sources de lumière, la première source de lumière 2 et la deuxième source de lumière 3. Eu égard aux sources de lumière, le dispositif d'éclairage 1 peut comprendre uniquement cette première source de lumière 2 et cette deuxième source de lumière 3.

Le dispositif d'éclairage 1 comprend au moins un réflecteur de lumière 4 apte à réfléchir, voire à focaliser, la lumière émise par la première source 2 et la lumière émise par la deuxième source 3.

Sur les modes de réalisation illustrés, le dispositif d'éclairage comprend un seul réflecteur 4.

Comme plus particulièrement visible sur les figures 1, 2 et 4, le réflecteur 4 présente une forme de paraboloïde, ou la forme d'une portion de paraboloïde.

Le réflecteur 4 est constitué par une pluralité de secteurs, comportant un secteur central 5 et au moins un secteur périphérique 6 adjacent dudit secteur central.

Sur les modes de réalisation illustrés, le réflecteur 4 comprend un secteur central 5 de part et d'autre duquel s'étendent plusieurs secteurs périphériques 6.

Le secteur central 5 est configuré pour réfléchir la lumière émise par la première source de lumière 2, de sorte que le dispositif d'éclairage 1 est apte à générer une distribution de lumière d'un feu de circulation diurne pour le véhicule automobile, comme il va être expliqué ci-après.

La première source de lumière 2 est disposée au foyer du secteur central 5.

Chaque secteur périphérique 6 est configuré pour réfléchir la lumière émise par la deuxième source de lumière 3, de sorte que le dispositif d'éclairage 1 est apte à générer une distribution de lumière d'un feu de route pour le véhicule automobile, comme il va être expliqué ci-après.

La deuxième source de lumière 3 est disposée au foyer d'au moins un secteur périphérique 6, préférentiellement de chaque secteur périphérique 6. Les secteurs périphériques 6 sont par exemple agencés dans leurs formes et leurs dispositions pour partager un même foyer. Dans ce cas, la deuxième source de lumière 3 est disposée au foyer de l'ensemble des secteurs périphériques 6.

Les secteurs périphériques 6 présentent préférentiellement une surface suffisante pour permettre la réalisation de la fonction de feu de route, car l'intensité du feu de route est directement proportionnelle à la surface éclairante. Cette surface peut être divisée en plusieurs secteurs 6 ou constituée par un seul secteur parabolique ayant la même dimension que la pluralité de secteurs 6. Il est toutefois préférable d'avoir une telle surface divisée en plusieurs secteurs 6 pour mieux maitriser l'homogénéité du faisceau.

Chaque secteur 5, 6 du réflecteur 4 présente une forme de bande incurvée 7 délimitée par un premier et un deuxième bords longs 8 et un premier et un deuxième bords courts 9.

Les bandes des secteurs 5, 6, sont solidarisées les unes aux autres par les bords longs 8, de sorte que le réflecteur 4 présente une forme de paraboloïde hyperbolique, ou une forme de portion de paraboloïde hyperbolique.

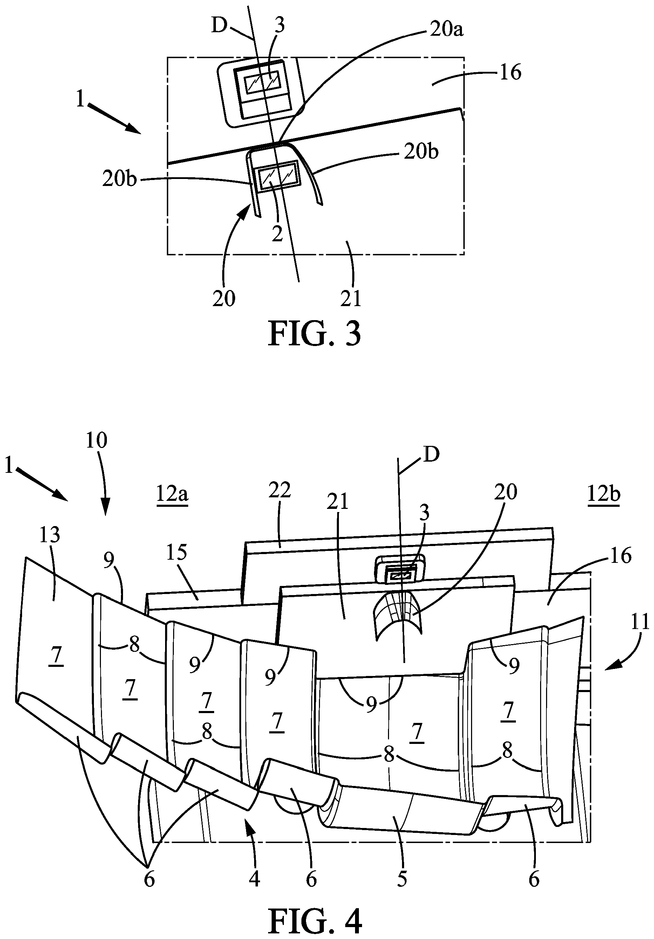

Les bandes formant les secteurs périphériques 6 sont de préférence disposées symétriquement deux à deux par rapport à la bande formant le secteur central 5, de sorte que, comme illustré sur la figure 4, des première et deuxième demi-structures 10, 11 du réflecteur 4 puissent être définies.

La première demi-structure 10 comprend une demi-bande du secteur central 5, et les bandes formant les secteurs périphériques 6 disposés d'un même côté 12a du premier bord long 8 du secteur central 5, la bande périphérique la plus éloignée du secteur central 5 étant référencée 13. La première demi-structure 10 comprend avantageusement quatre bandes formant secteurs périphériques 6.

De même, la deuxième demi-structure 11 comprend l'autre demi-bande du secteur central 5, et les bandes formant les secteurs périphériques 6 disposés d'un même côté 12b du deuxième bord long 8 du secteur central 5, le côté 12b étant opposé au côté 12a. Sur la figure 1, la bande périphérique de la demi-structure 11 la plus éloignée du secteur central 5 est référencée 14. Les demi-structures 10 et 11 peuvent être symétriques l'une de l'autre par rapport à l'axe séparant les demi-bandes du secteur central 5 ou une des demi-structures 10 et 11 peut compter moins de secteurs périphériques que l'autre des demi-structures 10 et 11.

Chaque demi-bande du secteur central 5 est par exemple d'une largeur, sensiblement égale à la largeur d'au moins un secteur périphérique 6, voire de chaque secteur périphérique 6, la largeur d'une bande ou demi-bande étant sa dimension prise selon son bord court 9. Selon cet exemple, le secteur central 5 est d'une largeur sensiblement deux fois plus grande que la largeur d'au moins un secteur périphérique 6, et avantageusement de chaque secteur périphérique 6.

Comme plus particulièrement visible sur les figures 2 et 3, les secteurs de chaque demi-structure 10, 11 sont échelonnés en marches d'escalier les uns relativement aux autres, depuis le secteur périphérique le plus éloigné, respectivement 13, 14, vers le secteur central 5.

De préférence, les bandes en marches d'escalier présentent un angle de dépouille de l'ordre de 3° et un rayon de 0,5 mm ménagé au niveau d'une arête formée entre deux bandes contiguës.

Comme visible sur les figures 1 à 5, le secteur central 5 forme une cuvette du réflecteur 4 courbé.

Comme visible sur les figures, la première source 2 et la deuxième source 3 sont disposées en face de la concavité formée par le secteur central 5 du réflecteur 4. Ainsi, les axes principaux de projection de lumière de la première source 2 et de la deuxième source 3 sont orientés directement vers le secteur central 5 du réflecteur 4.

Le dispositif d'éclairage 1 comprend également un élément de support 15 muni d'une face 16 en regard du réflecteur 4. Plus particulièrement, le réflecteur 4 est disposé relativement à la face 16 de l'élément de support 15 de sorte que les bords courts 9 délimitant les bandes incurvées 7 de certains secteurs 5, 6, et notamment du secteur central 5, soient directement en regard de la face 16 de l'élément de support 15, le réflecteur s'étendant depuis lesdits bords courts 9 en formant un angle sensiblement droit avec la face 16 de l'élément de support 15.

Comme illustré sur les figures 3 et 4, les sources de lumière 2 et 3 sont alignées sur la face 16 de l'élément de support 15 selon une direction D sensiblement orthogonale à la direction du premier bord 9 du secteur central 5.

La première source de lumière 2 est en arrière de la deuxième source 3, c'est-à-dire que la première source 2 est plus proche du réflecteur 4 que la deuxième source 3.

En d'autres termes, la distance entre la première source 2 et le bord 9 dans la direction D est inférieure à la distance entre la deuxième source 3 et le bord 9 dans la direction D.

Comme visible sur les figures 2 à 5, le dispositif d'éclairage 1 comprend un moyen de blocage partiel ou cache 20 de la lumière émise par la première source 2.

Le cache 20 présente de préférence un profil en forme générale en U et fait saillie de la face 16 vers le réflecteur 4 en s'étendant de façon sensiblement perpendiculaire à la face 16. Le profil en U est vu selon une coupe passant par le cache 20 et parallèle au plan de la face 21.

Le cache 20 est avantageusement constitué en tôle emboutie.

La coupe du cache 20 en forme de U comprend une branche principale 20a rectiligne et deux branches opposées 20b.

La branche 20a s'étend sensiblement parallèlement au bord 9 du secteur central 5.

Les deux branches opposées 20b s'étendent en direction opposées à la deuxième source 3.

Ainsi, seul le secteur central 5 du réflecteur 4 est éclairé par les rayons de la première source 2, tandis que les rayons de la première source 2 dirigés vers les secteurs périphériques 6 sont bloqués par le cache 20.

Les secteurs périphériques 6 du réflecteur 4 sont éclairés par les rayons de la deuxième source 3, tandis que les rayons de la deuxième source 3 dirigés vers le secteur central 5 sont partiellement bloqués par le cache 20.

Sur le mode de réalisation illustré aux figures 2 et 3, le cache 20 est asymétrique, les deux branches opposées 20b du U ne présentant pas la même courbure relativement à la branche principale 20a.

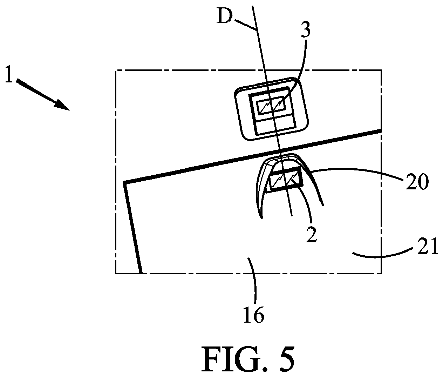

Sur le mode de réalisation illustré aux figures 4 et 5, le cache 20 est symétrique, les deux branches opposées 20b du U étant sensiblement l'image l'une de l'autre par symétrie orthogonale par rapport à un plan comprenant la direction D et sensiblement perpendiculaire à la face 16 de l'élément de support 15.

Comme visible sur les figures 2 à 5, l'élément de support 15 comprend une carte à circuit imprimé 21. La première source de lumière 2 peut être solidaire de la face avant de carte à circuit imprimé 21 et la deuxième source de lumière 3 peut être solidaire de la face 16 de l'élément de support 15. Plus particulièrement, la deuxième source de lumière 3 peut être solidaire d'un radiateur 22 par lequel s'étend le cas échéant l'élément de support 15.

Au moins un des secteurs est muni de motifs d'étalement de lumière. Les motifs sont de préférence disposés sur la surface du réflecteur 4 faisant face aux sources de lumière 2 et 3. Ils permettent avantageusement le rayonnement de la lumière émise par les sources de lumière 2 et 3 dans toutes les directions.

Avantageusement, les sources de lumières 2 et 3 sont constituées de sources à semi-conducteur, comprenant des diodes électroluminescentes.

Pour compenser le fait que le secteur central 5 ne focalise pas les rayons de la deuxième source 3, il est possible d'adapter la puissance des diodes électroluminescentes constituant la deuxième source 3 pour réaliser la fonction de feu de route. Par exemple, pour réaliser la fonction de feu de route, la deuxième source 3 peut être une LED Panasonic® à 2, 3 ou 4 puces. Lorsque tout le réflecteur 4 est focalisé sur la deuxième source 3, une alimentation de cette source d'une intensité 850 mA peut permettre de réaliser la fonction de feu de route. Lorsque le secteur central 5 ne focalise pas la deuxième source 3, on peut, pour compenser l'absence de la contribution du secteur central 5 à la fonction de feu de route, alimenter la LED constituant la deuxième source 3 avec un courant de 1,1 A à la place des 850 mA ; on conserve ainsi une fonction de feu de route ayant les performances requises.

### Combinaison feu de circulation diurne et feu de route

Le dispositif d'éclairage 1 va maintenant être décrit dans les configurations de feu de circulation diurne et feu de route.

La source de lumière 2 est disposée au foyer du secteur central 5, de sorte que, comme déjà indiqué, la lumière émise par la source 2 est focalisée par le secteur central 5.

Généralement, l'intensité lumineuse obtenue par réflexion d'un faisceau issu d'une source de lumière sur un réflecteur est inversement proportionnelle à l'agrandissement du réflecteur qui est lui-même inversement proportionnelle à la distance de la source de lumière et le réflecteur. Les considérations ci-dessous expliquent comment la présente invention exploite ce principe général.

Le secteur 5 étant central, une distribution de lumière générée par la première source 2 par le secteur central 5 présente une intensité lumineuse faible, du fait que le secteur central 5 est plus proche des sources de lumière 2 et 3. En effet, comme le secteur central 5 est proche des sources, son agrandissement des images réfléchies est important d'où une intensité faible de la lumière réfléchie.

Comme déjà indiqué, le cache 20 assure que la première source de lumière 2 n'éclaire pas les secteurs périphériques 6.

La source de lumière 3 est disposée au foyer des secteurs périphériques 6, de sorte que, comme déjà indiqué, la lumière émise par la source 3 est focalisée par les secteurs périphériques 6.

Les secteurs 6 étant périphériques, la distribution de lumière générée par la deuxième source 3 présente une intensité lumineuse plus forte, du fait que les secteurs périphériques 6 sont moins proches des sources de lumière 2 et 3 que le secteur central 5, mais aussi du fait qu'une pluralité de secteurs périphériques 6 est prévue, ce qui permet de générer une distribution de lumière d'un feu de route pour le véhicule automobile. En effet, les secteurs périphériques 6 sont plus éloignés des sources 2, 3 que le secteur central 5, leurs agrandissements des images est donc plus faible, d'où une intensité plus forte de la lumière réfléchie par les secteurs périphériques et d'où leur utilité pour réaliser la fonction de feu de route.

La source de lumière 3 éclaire également le secteur central 5, et n'est pas focalisée par le secteur central 5.

Néanmoins, l'agencement du dispositif d'éclairage 1 est tel que les rayons de la source de lumière 3 sont réfléchis par le secteur central 5 vers une partie haute de la distribution générée, comme il sera détaillé ci-après.

Ainsi, les rayons lumineux réfléchis par le secteur central 5 contribuent à l'éclairage optimisé de la route par le véhicule automobile.

### Fonctionnement du dispositif d'éclairage et/ou de signalisation

Pour une utilisation du véhicule automobile pendant la journée, seule la première source de lumière 2 est allumée, la deuxième source de lumière 3 étant éteinte, ce qui génère une distribution lumineuse de feu de circulation diurne uniquement.

Pour une utilisation du véhicule automobile pendant la nuit, deux configurations sont avantageusement prévues.

Une première configuration nocturne concerne une utilisation du véhicule en feu de croisement.

Dans cette configuration, la première source de lumière 2 est allumée, tandis que la deuxième source 3 est éteinte, ce qui génère une distribution lumineuse de feu de circulation diurne. Une autre source de lumière associée à un autre réflecteur (non représentés) génère une distribution lumineuse de feu de croisement. De préférence, la puissance de la première source 2 est réduite par rapport à l'utilisation diurne, par exemple de 20%, afin de ne pas modifier la distribution lumineuse globale générée par le véhicule automobile.

Une deuxième configuration nocturne concerne une utilisation du véhicule en feu de route.

Dans cette configuration, la première source de lumière 2 est éteinte, tandis que la deuxième source 3 est allumée, ce qui génère une distribution lumineuse de feu de route uniquement.

On note que dans chacune des trois configurations décrites, les deux sources de lumière 2 et 3 sont en opposition de fonctionnement, l'une étant allumée quand l'autre est éteinte, et vice versa.

On note également que dans chacune des trois configurations décrites, le dispositif d'éclairage est toujours allumé.

La matrice suivante illustre un exemple obtenu pour des intensités lumineuses mesurées, par exemple par simulations photométriques, pour le dispositif d'éclairage et/ou de signalisation 1 en configuration de feu de circulation diurne, en Cd/Deg :

| | | | | | | | |
|---|---|---|---|---|---|---|---|
| 10°haut | | | 126 | 97 | 112 | | |
| 5°haut | 392 | 281 | | 324 | | 247 | 338 |
| 0 | 383 | 383 | 589 | 555 | 556 | 341 | 258 |
| 5°bas | 120 | 322 | | 326 | | 558 | 79 |
| | 20° Gauche | 10° Gauche | 5° Gauche | 0 | 5° Droit | 10° Droit | 20° Droit |

Ces valeurs respectent la réglementation en vigueur à la date de dépôt de la demande pour une configuration de feu de circulation diurne.

La matrice suivante récapitule un autre exemple obtenu pour des intensités lumineuses mesurées, par exemple par simulations photométriques, pour le dispositif d'éclairage 1 en configuration de feu de circulation route, en Cd/Deg :

| | |
|---|---|
| H-5 Gauche | 8347 |
| H-2.5 Gauche | 22354 |
| H-2.5 Droit | 22793 |
| H-5 Droit | 7624 |
| Maximum | 53545 |
| HV | 52364 |

Ces valeurs respectent la réglementation en vigueur à la date de dépôt de la demande pour une configuration de feu de route.

Les deux matrices précédentes montrent bien que le dispositif d'éclairage 1 réalise alternativement la fonction de feu de circulation diurne et la fonction de feu de route pour un véhicule automobile.

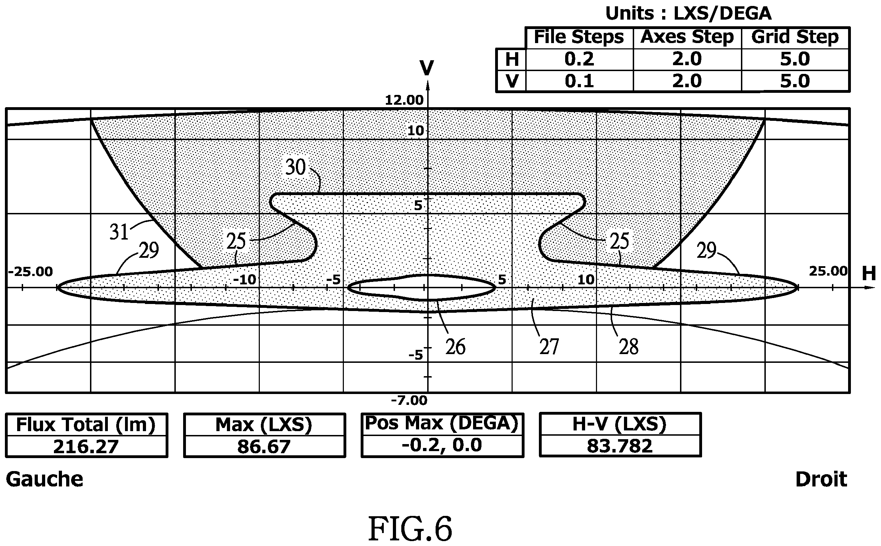

La figure 6 illustre une distribution lumineuse du dispositif d'éclairage 1 en configuration de feu de route selon des axes de projection H et V, respectivement pour horizontal et vertical, cette distribution représentant l'éclairement (mesuré en lux) obtenu sur un écran situé à 25 m du dispositif selon l'invention.

La distribution lumineuse illustrée sur la figure 1 est sensiblement symétrique par rapport à l'axe de projection vertical V.

Comme visible à la figure 6, la distribution lumineuse 25 présente une partie centrale 26 d'intensité lumineuse de valeur maximale au centre de la distribution (H=0, V=0). La partie centrale illustrée s'étend environ de 1° bas (au-dessus de l'axe de projection horizontal H) à 1° haut (au-dessous de l'axe de projection horizontal H) sur l'axe de projection vertical V et de 5° intérieur (Int, à gauche de l'axe de projection vertical V) à 4° extérieur (Ext, à droite de l'axe de projection vertical V) sur l'axe de projection horizontal H.

Une première zone 27 est un halo lumineux qui entoure la partie centrale 26. La zone 27 est délimitée par une base large 28 sensiblement au niveau de l'horizon, des bords 29 qui se rapprochent pour des valeurs positives de V, jusqu'à une valeur de l'ordre de 2,5°Gauche où la première zone présente un étranglement, avant de diverger à nouveau pour des valeurs de V plus élevées jusqu'à une base supérieure 30 sensiblement horizontale et moins étendue horizontalement que la base 28, pour une valeur de V de l'ordre de 6°Ext. Plus particulièrement, la première zone 27 s'étend verticalement environ de 2° bas à 6° haut ; la base large 28 s'étend environ de 22° Droit à 22° Ext, la base supérieure 30 s'étend environ de 9° Droit à 9° Gauche ; et l'étranglement s'étend environ de 6° Droit à 6° Ext.

La première zone 27 présente des intensités lumineuses plus faibles que la partie centrale 26.

Une deuxième zone 31 est un halo lumineux, d'intensité plus faible que la première zone 27.

La deuxième zone 31 entoure la première zone 27 depuis la partie dans laquelle les bords 29 convergent, de l'ordre de V=1° haut, et s'étend jusqu'à des valeurs de V supérieures à la valeur de V correspondant à la base supérieure 30 de la première zone 27, et au moins à des valeurs de V de l'ordre de 30° haut.

La première zone 27, ainsi que la partie centrale 26, sont obtenues par réflexion de la deuxième source 3 sur les secteurs périphériques 6.

La deuxième zone 31 est obtenue par réflexion de la deuxième source 3 sur le secteur central 5. Ainsi, les rayons émis par la deuxième source 3 et transmis mais non focalisés par le secteur central 5 contribuent à la distribution lumineuse par le dispositif d'éclairage 1 dans une zone verticale supérieure, qui est une zone utile pour l'éclairage à faible niveau de lumière, pour éclairer le haut des panneaux de signalisation, l'environnement au-dessus de l'horizon, etc., pour le confort du conducteur. Ainsi, la lumière réfléchie et non focalisé générée par la deuxième source 3 et le secteur central 5 n'est pas orientée vers le sol devant le véhicule et ne perturbe pas la distribution lumineuse au-dessous de l'horizon.

Grâce au dispositif d'éclairage selon la présente invention, il est possible de combiner dans un même dispositif d'éclairage le feu de circulation diurne et le feu de route, malgré des distributions lumineuses très différentes.

## Revendications

1. Dispositif d'éclairage et/ou de signalisation (1) pour véhicule, comprenant au moins une première source de lumière (2) et au moins une deuxième source de lumière (3), et au moins un réflecteur de lumière (4) apte à réfléchir la lumière émise par ladite au moins une première source (2) et la lumière émise par ladite au moins une deuxième source (3),
- ledit au moins un réflecteur (4) présentant une forme de paraboloïde comprenant une pluralité de secteurs (5, 6) comportant un secteur central (5) présentant un foyer et au moins un secteur périphérique (6) adjacent dudit secteur central (5), le secteur périphérique présentant un autre foyer,
le dispositif étant **caractérisé en ce que**:
- ladite première source de lumière (2) est disposée au foyer dudit secteur central (5),
- ladite deuxième source de lumière (3) est disposée au foyer dudit au moins un secteur périphérique (6), préférentiellement de chaque secteur périphérique (6),
- ledit secteur central (5) est configuré pour réfléchir la lumière émise par ladite au moins une première source de lumière (2), de sorte que le dispositif (1) est apte à générer une distribution de lumière d'un feu de circulation diurne, et
- ledit au moins un secteur périphérique (6) est configuré pour réfléchir la lumière émise par ladite au moins une deuxième source de lumière (3), de sorte que le dispositif (1) est apte à générer une distribution de lumière d'un feu de route.

2. Dispositif selon la revendication 1, **caractérisé en ce qu'**il comprend un seul réflecteur (4), chaque secteur (5, 6) du réflecteur (4) présentant une forme de bande incurvée de sorte que le réflecteur (4) présente une forme de paraboloïde hyperbolique.

3. Dispositif selon la revendication 2, **caractérisé en ce que** le réflecteur (4) comprend au moins deux secteurs périphériques (6) disposés le long de deux bords opposés de la bande formant le secteur central (5) du réflecteur (4).

4. Dispositif selon l'une quelconque des revendications 1 à 3, **caractérisé en ce que** le secteur central (5) forme une cuvette du réflecteur (4) paraboloïde.

5. Dispositif selon l'une des revendications 1 à 4, **caractérisé en ce que** chacune desdites première et deuxième sources (2, 3) est disposée en : en face de la concavité formée par le secteur central (5) du réflecteur (4).

6. Dispositif selon la revendication 5, **caractérisé en ce que** la première source de lumière (2) est plus proche du réflecteur (4) que la deuxième source de lumière (3).

7. Dispositif selon l'une des revendications 5 et 6, **caractérisé en ce qu'**il comprend un moyen de blocage partiel (20) de la lumière émise par la première source (2).

8. Dispositif selon l'une des revendications 5 à 7, **caractérisé en ce qu'**il comprend une carte à circuit imprimé (21) solidaire de la première source de lumière (2).

9. Dispositif selon l'une des revendications précédentes, **caractérisé en ce que** le secteur central (5) est d'une largeur sensiblement deux fois plus grande que la largeur d'au moins un secteur périphérique (6), et avantageusement de chaque secteur périphérique (6).

10. Projecteur pour véhicule comprenant au moins un dispositif d'éclairage et/ou de signalisation (1) selon l'une quelconque des revendications précédentes.

## Patentansprüche

1. Beleuchtungs- und/oder Signalisierungsvorrichtung (1) für ein Fahrzeug, umfassend mindestens eine erste Lichtquelle (2) und mindestens eine zweite Lichtquelle (3) und mindestens einen Lichtreflektor (4), der geeignet ist, das Licht, das von der mindestens einen ersten Lichtquelle (2) abgegeben wird, und das Licht, das von der mindestens einen zweiten Lichtquelle (3) abgegeben wird, zu reflektieren,
- wobei der mindestens eine Reflektor (4) eine Paraboloidform aufweist, umfassend eine Mehrzahl von Sektoren (5, 6), die einen Mittelsektor (5), der einen Brennpunkt aufweist, und mindestens einen Peripheriesektor (6) angrenzend an den Mittelsektor (5) umfassen, wobei der Peripheriesektor einen anderen Brennpunkt aufweist,
wobei die Vorrichtung **dadurch gekennzeichnet ist, dass**:
- die erste Lichtquelle (2) im Brennpunkt des Mittelsektors (5) angeordnet ist,
- die zweite Lichtquelle (3) im Brennpunkt des mindestens einen Peripheriesektors (6), vorzugsweise jedes Peripheriesektors (6), angeordnet ist,
- der Mittelsektor (5) dazu ausgebildet ist, das Licht zu reflektieren, das von der mindestens einen ersten Lichtquelle (2) abgegeben wird, so dass die Vorrichtung (1) eine Lichtverteilung eines Tagfahrlichts erzeugen kann, und
- der mindestens eine Peripheriesektor (6) dazu ausgebildet ist, das Licht zu reflektieren, das von der mindestens einen zweiten Lichtquelle (3) abgegeben wird, so dass die Vorrichtung (1) eine Lichtverteilung eines Fernlichts erzeugen kann.

2. Vorrichtung nach Anspruch 1, **dadurch gekennzeichnet, dass** sie einen einzelnen Reflektor (4) umfasst, wobei jeder Sektor (5, 6) des Reflektors (4) eine Form einen gekrümmten Streifens aufweist, so dass der Reflektor (4) eine hyperbolische Paraboloidform aufweist.

3. Vorrichtung nach Anspruch 2, **dadurch gekennzeichnet, dass** der Reflektor (4) mindestens zwei Peripheriesektoren (6) umfasst, die entlang zweier gegenüberliegender Ränder des Streifens angeordnet sind, der den Mittelsektor (5) des Reflektors (4) bildet.

4. Vorrichtung nach einem der Ansprüche 1 bis 3, **dadurch gekennzeichnet, dass** der Mittelsektor (5) eine Schüssel des Paraboloidreflektors (4) bildet.

5. Vorrichtung nach einem der Ansprüche 1 bis 4, **dadurch gekennzeichnet, dass** jede der ersten und zweiten Quelle (2, 3) gegenüber der Höhlung, die vom Mittelsektor (5) des Reflektor (4) gebildet wird, angeordnet ist.

6. Vorrichtung nach Anspruch 5, **dadurch gekennzeichnet, dass** die erste Lichtquelle (2) näher am Reflektor (4) als die zweite Lichtquelle (3) ist.

7. Vorrichtung nach einem der Ansprüche 5 und 6, **dadurch gekennzeichnet, dass** sie ein Mittel zum teilweisen Blockieren (20) des Lichts, das von der ersten Quelle (2) abgegeben wird, umfasst.

8. Vorrichtung nach einem der Ansprüche 5 bis 7, **dadurch gekennzeichnet, dass** sie eine Leiterplatte (21) umfasst, die fest mit der ersten Lichtquelle (2) verbunden ist.

9. Vorrichtung nach einem der vorhergehenden Ansprüche, **dadurch gekennzeichnet, dass** der Mittelsektor (5) eine Breite aufweist, die im Wesentlichen das Zweifache der Breite mindestens eines Peripheriesektors (6), und vorteilhafterweise jedes Peripheriesektors (6) beträgt.

10. Fahrzeugscheinwerfer umfassend mindestens eine Beleuchtungs- und/oder Signalisierungsvorrichtung (1) nach einem der vorhergehenden Ansprüche.

## Claims

1. Lighting and/or signalling device (1) for a vehicle, comprising at least one first light source (2) and at least one second light source (3), and at least one light reflector (4) capable of reflecting the light emitted by said at least one first source (2) and the light emitted by said at least one second source (3),
- said at least one reflector (4) having a paraboloid form comprising a plurality of segments (5, 6) comprising a central segment (5) having a focus and at least one peripheral segment (6) adjacent to said central segment (5), the peripheral segment having another focus,
the device being **characterized in that**:
- said first light source (2) is disposed at the focus of said central segment (5),
- said second light source (3) is disposed at the focus of said at least one peripheral segment (6), preferentially of each peripheral segment (6),
- said central segment (5) is configured to reflect the light emitted by said at least one first light source (2), such that the device (1) is capable of generating a light distribution of a daytime running light, and
- said at least one peripheral segment (6) is configured to reflect the light emitted by said at least one second light source (3), such that said device (1) is capable of generating a light distribution of a main beam.

2. Device according to Claim 1, **characterized in that** it comprises a single reflector (4), each segment (5, 6) of the reflector (4) having the form of an incurved strip such that the reflector (4) has a hyperbolic paraboloid form.

3. Device according to Claim 2, **characterized in that** the reflector (4) comprises at least two peripheral segments (6) disposed along two opposing edges of the strip forming the central segment (5) of the reflector (4) .

4. Device according to any one of Claims 1 to 3, **characterized in that** the central segment (5) forms a cup of the paraboloid reflector (4).

5. Device according to one of Claims 1 to 4, **characterized in that** each of said first and second sources (2, 3) is disposed facing the concavity formed by the central segment (5) of the reflector (4).

6. Device according to Claim 5, **characterized in that** the first light source (2) is closer to the reflector (4) than the second light source (3).

7. Device according to one of Claims 5 and 6, **characterized in that** it comprises means (20) for partially blocking the light emitted by the first source (2) .

8. Device according to one of Claims 5 to 7, **characterized in that** it comprises a printed circuit board (21) secured to the first light source (2).

9. Device according to one of the preceding claims, **characterized in that** the central segment (5) has a width substantially two times greater than the width of at least one peripheral segment (6), and advantageously of each peripheral segment (6).

10. Headlight for a vehicle comprising at least one lighting and/or signalling device (1) according to any one of the preceding claims.
